# EUROPEAN PATENT APPLICATION

(11) **EP 4 787 031 A1**
(43) Date of publication of application: **05.08.2026**
(21) Application number: 24911351.5
(22) Date of filing: 26.12.2024
(51) Int. Cl.: G02B 6/036

(54) **RADIATION-INSENSITIVE SINGLE-MODE OPTICAL FIBER**

(30) Priority: 28.12.2023 CN 202311837334
(71) Applicant: Yangtze Optical Fibre and Cable Joint Stock Limited Company, Wuhan, Hubei 430074 (CN)
(72) Inventor: LI, Yu, Wuhan, Hubei 430074 (CN); WANG, Song, Wuhan, Hubei 430074 (CN); ZHONG, Li, Wuhan, Hubei 430074 (CN); ZHOU, You, Wuhan, Hubei 430074 (CN); YUE, Ling, Wuhan, Hubei 430074 (CN); HU, Xiujuan, Wuhan, Hubei 430074 (CN); FANG, Zucheng, Wuhan, Hubei 430074 (CN); YANG, Kun, Wuhan, Hubei 430074 (CN); YANG, Chen, Wuhan, Hubei 430074 (CN)
(74) Representative: Lorenz Seidler Gossel Part. mbB
(86) International application number: PCT/CN2024/142816
(87) International publication number: WO 2025/140430

(57) **Abstract**

The present invention discloses a radiation-insensitive single-mode optical fiber, characterized by comprising a core layer, a first cladding layer, and a second cladding layer arranged sequentially from inside to outside; or comprising a core layer, a first buffer layer, a first cladding layer, a second buffer layer, and a second cladding layer arranged sequentially from inside to outside; wherein the core layer, the first buffer layer, the first cladding layer, the second buffer layer, and the second cladding layer are all made of quartz glass doped with a cerium element, an aluminum element, and a fluorine element. The contents of the cerium element, aluminum element, and fluorine element are constant in the radial direction of the core layer, the first cladding layer, and the second cladding layer, respectively, and vary linearly in the first buffer layer and the second buffer layer. By regulating the contents of the cerium element, aluminum element, and fluorine element in the core layer, first cladding layer, and second cladding layer, the present invention optimizes the stress distribution of the optical fiber, reduces the residual stress, and reduces the generation of fatigue bonds and drawing defects in the optical fiber, thereby improving the radiation-resistant performance of the optical fiber.

## Description

### Field of the Invention

The present invention belongs to the technical field of optical fiber doping and structure, and specifically relates to a radiation-insensitive single-mode optical fiber suitable for use in a radiation environment.

### Background of the Invention

Optical fibers are widely used as optical transmission media in special radiation environments for oceans, aerospace, nuclear power plants, and intelligent environmental monitoring due to their advantages of low loss, high transmission rate, small volume, light weight, resistance to electrostatic interference, etc. However, in these radiation environments, the communication capability of the optical fibers often degrades rapidly, mainly owing to the generation of defective structures in quartz optical fiber materials caused by ionizing radiation damage.

The radiation-resistant performance of the optical fibers is closely related to the material structure thereof. The material system of common optical fibers generally contains doped germanium element. During the fiber drawing process, due to the influence of drawing tension and the thermal history of the optical fibers, many material defects or precursors will be formed in the core layer, and these defects or precursors will further deteriorate under radiation environments, resulting in chemical bond-breaking or microstructural changes of the materials, thereby causing significant radiation-induced additional absorption loss. With the continuously rapid increase of the loss, the optical fibers will lose their ability to transmit optical signals. Commercially available radiation-resistant optical fibers generally adopt undoped silica or fluorine-doped materials for the core layer, and exhibit better radiation resistance performance compared with germanium-doped optical fibers. However, in order to form an optical waveguide, the core and cladding of these two single fluorine-doped systems exhibit significant differences in material properties such as viscosity and thermal expansion coefficient. This causes the tension to concentrate in the core during the drawing process, increasing the residual stress and drawing defects of the optical fibers, which may deteriorate the transmission performance of the optical fibers.

In addition, the optical fibers play a role of long-distance data transmission in the fields of aerospace and nuclear power, and are usually laid by cabling. Whether in the process of cabling or laying, the optical fibers inevitably undergo coiling, bending, twisting, etc. The additional loss of the optical fibers in the bending state increases significantly, thereby deteriorating the transmission performance of the optical fibers.

Researchers worldwide have been committed to solving the design and manufacturing problems of radiation-resistant optical fibers, and have improved the material composition, profile design and manufacturing process of the optical fibers to meet diverse application requirements. For example, a patent with a publication number CN102126825A discloses a method for manufacturing a radiation-resistant high-performance quartz optical fiber, which involves regulating the contents of hydroxyl and fluorine element in the fiber core and cladding. The fiber core contains 0-2000 ppm of hydroxyl and 0-1000 ppm of fluorine, the inner cladding is doped with 10000-20000 ppm of fluorine, and the outer cladding is doped with 1000-6000 ppm of fluorine. Meanwhile, a process combination of VAD and MCVD or VAD and PCVD is applied, such that the obtained optical fiber has a more stable microstructure and a good radiation-resistant performance. However, since the manufacturing method involves a combination of different deposition processes and multiple fusions of the core rod and the fluorine-doped tube, it is highly likely to cause an increase in the hydroxyl content, thereby affecting the intrinsic attenuation and radiation induced loss of the optical fiber. At the same time, this method is relatively complex in operation and is not suitable for industrial mass production. For another example, a patent with a publication number CN106646735A discloses a radiation-resistant optical fiber and manufacturing method thereof. The optical fiber comprises an outer coating layer, an outer cladding layer, an inner cladding layer, and a fiber core arranged from the outside to the inside, wherein the outer coating layer, the outer cladding layer and the fiber core are doped with variable valence metal elements at different contents. The outer coating layer contains 200-1000 ppm of oxides of variable valence metal elements, the outer cladding layer contains 200-500 ppm of oxides of variable valence metal elements, and the fiber core contains 300-800 ppm of oxides of variable valence metal elements. However, this patent does not regulate the material compositions of the core layer and the cladding layer of the optical fiber. When the temperature rapidly drops from a high temperature to room temperature during the drawing process, the significant discrepancy in physical properties (such as thermal expansion coefficient, viscosity) between the core and the cladding leads to different cooling rates and shrinkage degree, this generates a considerable residual stress in the core, resulting in an increase in fatigue bonds and defects inside the optical fiber, thereby affecting the radiation-resistant performance of the optical fiber.

### Summary of the Invention

In view of one or more of the above defects or improvement requirements in the prior art, the present invention provides a radiation-insensitive single-mode optical fiber, which optimizes the stress distribution of the optical fiber, reduces the residual stress, and reduces the generation of fatigue bonds and drawing defects in the optical fiber, thereby improving the radiation-resistant performance of the optical fiber.

In order to achieve the above objectives, the present invention provides a radiation-insensitive single-mode optical fiber, comprising a core layer, a first cladding layer, and a second cladding layer arranged sequentially from inside to outside; or comprising a core layer, a first buffer layer, a first cladding layer, a second buffer layer, and a second cladding layer arranged sequentially from inside to outside, wherein,
the core layer, the first buffer layer, the first cladding layer, the second buffer layer, and the second cladding layer are all made of quartz glass doped with a cerium element, an aluminum element, and a fluorine element.

As a further improvement of the present invention,
the cerium element has a constant content of A1 in a radial direction of the core layer, a constant content of A2 in a radial direction of the first cladding layer, and a constant content of A3 in a radial direction of the second cladding layer;
the aluminum element has a constant content of B1 in the radial direction of the core layer, a constant content of B2 in the radial direction of the first cladding layer, and a constant content of B3 in the radial direction of the second cladding layer; and
the fluorine element has a constant content of C1 in the radial direction of the core layer, a constant content of C2 in the radial direction of the first cladding layer, and a constant content of C3 in the radial direction of the second cladding layer.

As a further improvement of the present invention,
the content of the cerium element varies linearly from A1 to A2 in a radial direction of the first buffer layer from inside to outside, and varies linearly from A2 to A3 in a radial direction of the second buffer layer from inside to outside;
the content of the aluminum element varies linearly from B1 to B2 in the radial direction of the first buffer layer from inside to outside, and varies linearly from B2 to B3 in the radial direction of the second buffer layer from inside to outside; and
the content of the fluorine element varies linearly from C1 to C2 in the radial direction of the first buffer layer from inside to outside, and varies linearly from C2 to C3 in the radial direction of the second buffer layer from inside to outside.

As a further improvement of the present invention,
a content relationship of the cerium element in different layer structures satisfies A1>A3>A2;
a content relationship of the aluminum element in different layer structures satisfies B1>B3>B2; and
a content relationship of the fluorine element in different layer structures satisfies C2≥C3>C1.

As a further improvement of the present invention,
in the core layer, the cerium element has a content A1 of 1000-2500 ppm, the aluminum element has a content B1 of 3000-6000 ppm, and the fluorine element has a content C1 of 3000-15000 ppm;
in the first cladding layer, the cerium element has a content A2 of 50-500 ppm, the aluminum element has a content B2 of 200-1600 ppm, and the fluorine element has a content C2 of 10000-20000 ppm; and
in the second cladding layer, the cerium element has a content A3 of 500-2000 ppm, the aluminum element has a content B3 of 1600-5000 ppm, and the fluorine element has a content C3 of 5000-20000 ppm.

As a further improvement of the present invention,
a content ratio A1/A2 of the cerium element in the core layer and the first cladding layer is 5-20; and/or,
a content ratio A1/A3 of the cerium element in the core layer and the second cladding layer is 1-5.

As a further improvement of the present invention,
a relative refractive index difference Δn1 between the core layer and a silica is 0.2% to 0.5%;
a relative refractive index difference Δn2 between the first cladding layer and a silica is -0.25% to -0.6%; and
a relative refractive index difference Δn3 between the second cladding layer and a silica is -0.1% to 0.1%.

As a further improvement of the present invention, the core layer has a diameter of 7.5-10 µm, the first buffer layer has a diameter of 10-13 µm, the first cladding layer has a diameter of 18-24 µm, the second buffer layer has a diameter of 24-30 µm, and the second cladding layer has a diameter of 124-126 µm.

As a further improvement of the present invention, a maximum stress difference value ΔP of the radiation-insensitive single-mode optical fiber is less than 10 MPa.

As a further improvement of the present invention, in an environment with a total radiation dose of 100 kGy, the radiation-insensitive single-mode optical fiber has an attenuation of less than 20 dB/km at wavebands of 1310 nm and 1550 nm.

Overall, the above technical solutions conceived by the present invention have the following beneficial effects as compared with the prior art:
(1) The radiation-insensitive single-mode optical fiber of the present invention regulates the contents of the cerium element, the aluminum element, and the fluorine element in the core layer, the first cladding layer, and the second cladding layer of the optical fiber, so as to avoid significant differences in the deformation degree of each layer and stress concentration in the core layer during the rapid thermal shock of drawing process, which are caused by large differences in material properties (such as viscosity, thermal expansion coefficient) of different layers; thus, the stress distribution ΔP of the optical fiber (the difference between the maximum stress and the minimum stress in the optical fiber) is optimized, the residual stress is reduced, the generation of fatigue bonds and drawing defects in the optical fiber is decreased, and the radiation resistance of the optical fiber is thereby improved. Furthermore, the radiation-insensitive single-mode optical fiber of the present invention introduces linear-varying buffer layers between the core layer/first cladding layer and between the first cladding layer/second cladding layer, so that different dopants vary uniformly throughout the optical fiber, especially at the interfaces of different layers, such that a microscopic difference in the physical properties of the optical fiber is reduced, thereby not only reducing the stress at the interfaces, but also making the stress distribution throughout the optical fiber more uniform (with a smaller ΔP), and further improving the radiation-resistant performance of the optical fiber.
(2) The radiation-insensitive single-mode optical fiber of the present invention, when being coiled for 10 turns with a bending diameter of 30 mm, has a bending additional loss of less than 0.1 dB at 1310 nm at 1550 nm. In an environment with a total radiation dose of 100 kGy, the radiation-insensitive single-mode optical fiber according to the examples of the present invention has an attenuation of less than 20 dB/km at wavebands of 1310 nm and 1550 nm. And, a maximum stress difference value ΔP of the radiation-insensitive single-mode optical fiber according to the examples of the present invention is less than 10 MPa.

### Brief Description of the Drawings

Fig. 1 shows an optical fiber refractive index profile view and an optical fiber section view of a radiation-insensitive single-mode optical fiber according to an example of the present invention;
Fig. 2 shows an optical fiber refractive index profile view and an optical fiber section view of a radiation-insensitive single-mode optical fiber according to another example of the present invention; and
Fig. 3 shows an optical fiber refractive index profile view and an optical fiber section view according to Comparative Example 1 of the present invention.

### Detailed Description of the Embodiments

In order to make the objectives, technical solutions, and advantages of the present invention more clear and understandable, the present invention will be further illustrated in detail below in combination with the accompanying drawings and examples. It should be understood that, the specific examples described herein are only used for explaining the present invention, but are not intended to limit the present invention. In addition, the technical features involved in the various examples of the present invention described below may be combined with each other as long as they do not conflict with each other.

In the description of the present invention, it should be understood that, the orientational or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., are based on those shown in the accompanying drawings. These terms are only intended to facilitate the description of the invention and simplify the description, but are not intended to indicate or imply that the apparatuses or elements referred to must have specific orientations, or must be constructed or operated in specific orientations. Therefore, they should not be understood to limit the present invention.

In addition, the terms "first" and "second" are only intended for the purpose of description, but cannot be understood for indicating or implying a relative importance or implying the number of the technical features indicated. Therefore, the features limited by "first" and "second" may explicitly or implicitly comprise at least one of these features. In the description of the present invention, "a plurality of" means at least two, such as two, three, etc., unless otherwise clearly and specifically defined.

In the present invention, unless otherwise clearly specified and defined, the terms "installation", "connected", "connection", "fixation" should be understood in a broad sense, for example, they may mean a fixed connection, a detachable connection, or an integral connection; they may mean a mechanical connection or an electrical connection; and they may mean a directly connection or an indirectly connection by means of an intervenient medium, and may mean an internal communication between two elements or an interaction relationship between two elements, unless otherwise clearly defined. Those skilled in the art may understood the specific meanings of the above terms in the present invention according to specific situations.

In the present invention, unless otherwise clearly specified and defined, when a first feature is arranged "on" or "under" a second feature, it means that the first feature may be in direct contact with the second feature, or the first feature may be in indirect contact with the second feature through an intervenient medium. Furthermore,, when a first feature is arranged "on", "above" or "over" a second feature, it may mean that the first feature is right above or obliquely above the second feature, or merely indicate that the first feature has a level higher than that of the second feature. When a first feature is arranged "under", "beneath" or "below" a second feature, it may mean that the first feature is right beneath or obliquely beneath the second feature, or merely indicate that the first feature has a level lower than that of the second feature.

The present invention provides a radiation-insensitive single-mode optical fiber, which overcomes the drawbacks of the existing radiation resistant optical fibers, such as deficiency in radiation-resistant, bending performance, and residual stress in the manufacturing process, by regulating the material composition of different layers of the optical fiber.

The radiation-insensitive single-mode optical fiber according to the examples of the present comprises a core layer, a first cladding layer, and a second cladding layer arranged in sequence from inside to outside; or comprise a core layer, a first buffer layer, a first cladding layer, a second buffer layer, and a second cladding layer arranged in sequence from inside to outside, wherein the core layer, the first buffer layer, the first cladding layer, the second buffer layer, and the second cladding layer are all made of quartz glass doped with cerium element, aluminum element, and fluorine element.

By improving the material composition and profile design of the optical fiber and doping fluorine element and variable valence metal cerium element into different structures (the core layer, the inner cladding layer, the outer cladding layer) of the optical fiber, the present invention significantly reduces the radiation-induced loss of the optical fiber and its sensitivity to radiation; and even when applied to extreme regions with a high radiation dose, the inventive optical fiber still has a good radiation-resistant performance. Among these, the cerium element is a colorless variable valence element, Ce³⁺ may provide a certain protective effect on the hole structures generated by radiation, thereby reducing the generation of color centers, and Ce⁴⁺ may capture excess electrons generated by radiation, thereby suppressing the related color centers generated by captured electrons, therefore, doping cerium element may effectively reduce the generation of color centers when the optical fiber is under radiation. In addition, doping the fluorine element into the optical fiber can achieve a radiation hardening effect, wherein the fluorine atoms bond to color centers or defect centers, and the bond energy of Si-F is greater than that of Si-O, thereby suppressing defects generated during radiation and improving the radiation-resistant performance of the optical fiber.

By co-doping the cerium element, the aluminum element, and the fluorine element in the optical fiber, the present invention ensures the manufacturability of the optical fiber and optimizes the radiation-resistant performance of the optical fiber. The cerium element and the fluorine element play a role of radiation hardening in the optical fiber, they impose opposite impacts on refractive index and have varying degrees of influence on material physical properties (thermal expansion coefficient, viscosity), therefore, the cerium element and the fluorine element are co-doped to form a designed waveguide structure and homogenize the stress distribution throughout the optical fiber. The aluminum element is generally added as a co-dopant with the cerium element to expand the skeleton of silica, and facilitate the reactive incorporation of the cerium element into the optical fiber, so as to increase the doping content and controllable range of the cerium element.

In an example of the present invention, the cerium element is present in a form of oxides of variable valence metal elements, including CeO₂, Ce₂O₃, etc; the aluminum is present in a form of oxides of metal elements, including Al₂O₃; the fluorine element is preferably present in a form of [SiO₃F], [SiO₂F₂], [SiOF₃], [CeO₃F], [CeO₂F₂], and [CeOF₃]. A doping material for cerium element is preferably CeCl₃; a doping material for aluminum element is preferably AlCl₃; and a doping material for fluorine element is preferably one or more of CF₄, C₂F₆, C₃F₈, SiF₄, SF₆, C₂F₂Cl₂, and C₂F₃Cl₃.

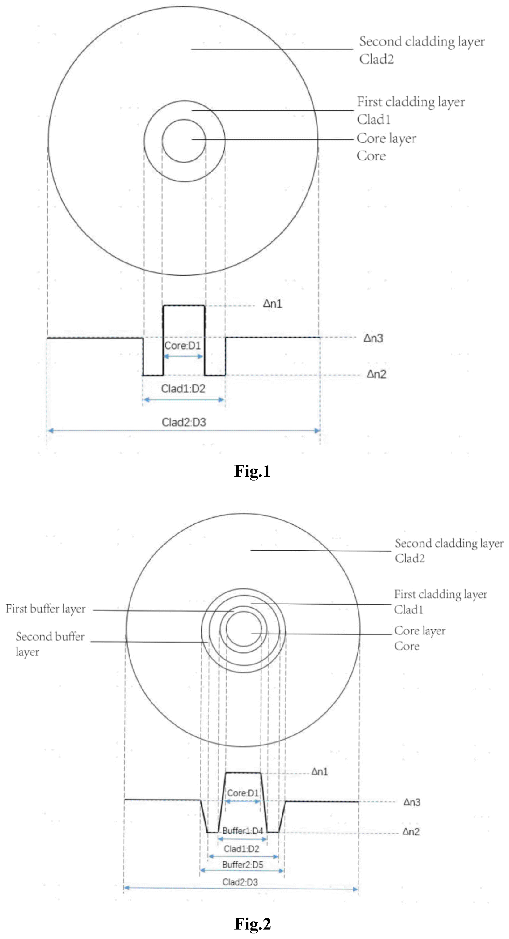

As shown in Fig. 1, in a first example of the present invention, the radiation-insensitive single-mode optical fiber comprises a core layer, a first cladding layer, and a second cladding layer arranged in sequence from inside to outside; wherein, the core layer, the first cladding layer, and the second cladding layer are all made of quartz glass material as the matrix, simultaneously doped with cerium element, aluminum element, and fluorine element, wherein, the core layer has a diameter of D1, the first cladding layer has a diameter of D2, and the second cladding diameter layer has a diameter of D3.

Preferably, the content of the cerium element remains constant in radial direction of the core layer, the first cladding layer, and the second cladding layer, respectively; wherein the content of the cerium element is constant at A1 in the core layer from r=0 to r=(D₁/2), constant at A2 in the first cladding layer from r=(D₁/2) to r=(D₂/2), and constant at A3 in the second cladding layer from r=(D₂/2) to r=(D₃/2).

The content of the aluminum element remains constant in radial direction of the core layer, the first cladding layer, and the second cladding layer, respectively; wherein the content of the aluminum element is constant at B1 in the core layer from r=0 to r=(D₁/2), constant at B2 in the first cladding layer from r=(D₁/2) to r=(D₂/2), and constant at B3 in the second cladding layer from r=(D₂/2) to r=(D₃/2).

The content of the fluorine element remains constant in radial direction of the core layer, the first cladding layer, and the second cladding layer, respectively; wherein the content of the fluorine element is constant at C1 in the core layer from r=0 to r=(D₁/2), constant at C2 in the first cladding layer from r=(D₁/2) to r=(D₂/2), and constant at C3 in the second cladding layer from r=(D₂/2) to r=(D₃/2).

When the contents of the cerium element, the aluminum element, and the fluorine element each are constant in the radial direction of the core layer, the first cladding layer, and the second cladding layer, respectively; the contents of above different elements are designed and controlled, so as to make the physical properties of the core layer, the first cladding layer, and the second cladding layer of different layers of the optical fiber more similar, thereby eliminating the relatively large residual stress in the optical fiber caused by difference in physical properties (thermal expansion coefficient, viscosity) during the drawing process.

As shown in Fig. 2, in a second example of the present invention, the radiation-insensitive single-mode optical fiber comprises a core layer, a first buffer layer, a first cladding layer, a second buffer layer, and a second cladding layer arranged in sequence from inside to outside, wherein the core layer, the first cladding layer, the second cladding layer, and the buffer layers are all made of quartz glass material as a matrix, and simultaneously doped with cerium element, aluminum element, and fluorine element, wherein, the core layer has a diameter of D1, the first cladding layer has a diameter of D2, the second cladding layer has a diameter of D3, the first buffer layer has a diameter of D4, and the second buffer layer has a diameter of D5.

Preferably, the content of the cerium element remains constant in radial direction of the core layer, the first cladding layer, and the second cladding layer respectively, and varies linearly in radial direction of the buffer layers from inside to outside. Specifically, the content of the cerium element remains constant at A1 in the core layer from r=0 to r=(D₁/2), varies linearly from A1 to A2 in the first buffer layer from r=(D₁/2) to r=(D₄/2), remains constant at A2 in the first cladding layer from r=(D₄/2) to r=(D₂/2, varies linearly from A2 to A3 in the second buffer layer from r=(D₂/2) to r=(D₅/2), and remains constant at A3 in the second cladding layer from r=(D₅/2) to r=(D₃/2).

The content of the aluminum element remains constant in radial direction of the core layer, the first cladding layer, and the second cladding layer respectively, and varies linearly in a radial direction of the buffer layers from inside to outside. Specifically, the content of the the aluminum element remains constant at B1 in the core layer from r=0 to r=(D₁/2), varies linearly from B1 to B2 in the first buffer layer from r=(D₁/2) to r=(D₄/2), remains constant at B2 in the first cladding layer from r=(D₄/2) to r=(D₂/2), varies linearly from B2 to B3 in the second buffer layer from r=(D₂/2) to r=(D₅/2), and remains constant at B3 in the second cladding layer from r=(D₅/2) to r=(D₃/2).

The content of the fluorine element remains constant in radial direction of the core layer, the first cladding layer, and the second cladding layer respectively, and varies linearly in radial direction of the buffer layers from inside to outside. Specifically, the content of the fluorine element remains constant at C1 in the core layer from r=0 to r=(D₁/2), varies linearly from C1 to C2 in the first buffer layer from r=(D₁/2) to r=(D₄/2), remains constant at C2 in the first cladding layer from r=(D₄/2) to r=(D₂/2), varies linearly from C2 to C3 in the second buffer layer from r=(D₂/2) to r=(D₅/2), and remains constant at C3 in the second cladding layer from r=(D₅/2) to r=(D₃/2).

It should be noted that, in the present example, the contents of the cerium element, the aluminum element and the fluorine element change linearly in the radial direction of the buffer layers from inside to outside, wherein the linear change refers to gradual increase or gradual decrease of the content in the radial direction from inside to outside.

When the contents of the cerium element, the aluminum element, and the fluorine element remains constant in the radial direction of the core layer, the first cladding layer, and the second cladding layer respectively, and change linearly in the buffer layers, not only are the physical properties of the core layer, the first cladding layer, and the second cladding layer made more similar, but also, due to the addition of the buffer layers, different dopants change uniformly throughout the optical fiber, especially at the interfaces between the core layer/the first cladding layer and between the first cladding layer/the second cladding layer, such that a microscopic difference in physical properties (such as thermal expansion coefficient, viscosity, etc.) of the optical fiber may be smaller, thereby not only reducing the stress at the interface, but also making the stress distribution throughout the optical fiber more uniform and further reducing the residual stress.

It can be understood that the above two examples differ in that the second example further includes the first buffer layer and the second buffer layer relative to the first example.

Based on the technical solutions of the two examples set forth above, and taking into comprehensive consideration the doping limit and waveguide requirements, a material composition that renders the physical properties of the core layer, first cladding layer, second cladding layer, and buffer layers substantially similar is provided, wherein the relationships of the doping elements contents are as follows: the cerium element has a relationship of A1>A3>A2 in the respective layers; the aluminum element has a relationship of B1>B3>B2 in the respective layers; and the fluorine element has a relationship of C2≥C3>C1 in the respective layers.

Furthermore, to render the physical properties of the core layer, first cladding layer, second cladding layer and buffer layers more closely matched, and to achieve a more uniform stress distribution across the entire optical fiber profile, the contents of the respective doping elements are as follows: in the core layer, the cerium element content A1 is 1000-2500 ppm, and correspondingly, the aluminum element content B1 is 3000-6000 ppm, and the fluorine element content C1 is 3000-15000 ppm; in the first cladding layer, the cerium element content A2 is 50-500 ppm, and correspondingly, the aluminum element content B2 is 200-1600 ppm, and the fluorine element content C2 is 10000-20000 ppm; in the second cladding layer, the cerium element content A3 is 500-2000 ppm, and correspondingly, the aluminum element content B3 is 1600-5000 ppm and the fluorine content C3 is 5000-20000 ppm.

To render the physical properties of the core layer, first cladding layer, second cladding layer and buffer layers more closely matched, and to achieve a more uniform stress distribution across the entire optical fiber profile, further preferably, in the core layer, the cerium element content A1 is 1500-2500 ppm, and correspondingly, the aluminum element content B1 is 3000-5000 ppm, and the fluorine element content C1 is 5000-12000 ppm; in the first cladding layer, the cerium element content A2 is 100-400 ppm, and correspondingly, the aluminum element content B2 is 200-1200 ppm, and the fluorine element content C2 is 10000-18000 ppm; in the second cladding layer, the cerium element content A3 is 500-1500 ppm, and correspondingly, the aluminum content B3 is 1600-4000 ppm and the fluorine content C3 is 8000-18000 ppm.

Furthermore, the cerium element content ratio A1/A2 between the core layer and the first cladding layer is preferably 5-20. By providing the first cladding layer and controlling the cerium element content ratio between the core layer and the first cladding layer, the present invention can effectively increase the refractive index difference value (Δn1- Δn2) between the core layer and the first cladding layer of the optical fiber while satisfying the other parameter ranges defined herein, thereby enhancing the bending insensitivity performance of the optical fiber. If the cerium element content ratio between the core layer and the first cladding layer is excessively low, the required fluorine content in the inner cladding layer will increase, and a multi-bubble defect tends to arise during preform fabrication, rendering the optical fiber nonmanufacturable. If the cerium element content ratio between the core layer and the inner cladding layer is excessively high, the controllable range of fluorine element in the core layer becomes extremely narrow, leading to a reduction in (Δn1-Δn2), degraded bending resistance, and an increase in residual stress of the optical fiber.

Furthermore, the cerium element content ratio A1/A3 between the core layer and the second cladding layer is preferably 1-5. By controlling the cerium element content ratio between the core layer and the second cladding layer, the present invention can optimize the residual stress of the optical fiber while satisfying the other parameter ranges defined herein. If the cerium element content ratio between the core layer and the second cladding layer is excessively low, the fluorine content required in the second cladding layer will likewise increase while satisfying the optical fiber waveguide requirements, rendering the optical fiber nonmanufacturable. Whereas if the cerium element content ratio between the core layer and the second cladding layer is excessively high, the controllable range of fluorine element in the core layer becomes extremely narrow, and the residual stress of the optical fiber will increase.

In a preferred example, the relative refractive index difference Δn1 of the core layer with respect to a silica ranges from 0.2% to 0.5%; the relative refractive index difference Δn2 of the first cladding layer with respect to a silica ranges from -0.25% to -0.6%; and the relative refractive index difference Δn3 of the second cladding layer with respect to a silica ranges from -0.1% to 0.1%. The values of Δn1 and Δn3 are determined in accordance with the numerical aperture requirements for the corresponding standard communication wavelength bands. If the value of Δn2 is excessively small, the improvement in the bending resistance of the optical fiber is not sufficiently pronounced. If the value of Δn2 is excessively large, it will exceed the doping limit, rendering the fabrication infeasible.

In a preferred example, the core layer has a diameter D1 ranging from 7.5 to 10 µm; the first buffer layer has a diameter D4 ranging from 10 to 13 µm; the first cladding layer has a diameter D2 ranging from 18 to 24 µm; the second buffer layer has a diameter D5 ranging from 24 to 30 µm; and the second cladding layer has a diameter D3 ranging from 124 to 126 µm. The values of D1 and D3 are selected in accordance with the numerical aperture requirements for the corresponding standard communication wavelength bands. If the diameter D2 of the first cladding layer is excessively small, the improvement in the bending resistance of the optical fiber will not be sufficiently pronounced. If D2 is excessively large, the numerical aperture of the optical fiber will become excessively large while the mode field diameter will become excessively small, thereby failing to meet the application requirements of the corresponding standard communication wavelength bands. If the buffer layer diameters D4 and D5 are excessively small, the desired buffering effect will be not achieved, and abrupt changes in the content of different elements will still occur at the interfaces, thus failing to avoid non-uniform stress distribution. If D4 and D5 are excessively large, the mode field diameter of the fiber will become excessively large, thereby failing to satisfy the application requirements of the corresponding standard communication wavelength bands.

By controlling the content of the cerium element, the aluminum element, and the fluorine element in the core layer, the first cladding layer, and the second cladding layer of the optical fiber, the present invention avoids substantial differences in material properties (such as viscosity, thermal expansion coefficient, etc.) between the various layers, which causes significant difference in the deformation degree between individual layers during the rapid thermal shock associated with drawing process and stress concentration on the core layer. The radiation-insensitive single-mode optical fiber of the present invention thus optimizes the stress distribution ΔP (the difference between the maximum and the minimum stress on the optical fiber), minimizes residual stress, reduces the occurrence of fatigue bonds and drawing defects within the optical fiber, and thereby enhances the radiation resistance of the optical fiber.

Furthermore, by providing linear-varying buffer layers between the core layer and the first cladding layer, and between the first cladding layer and the second cladding layer, the present invention enables the uniform variation of different dopants throughout the optical fiber, especially at the interfaces between different layers. This reduces difference in the physical properties of the optical fiber, thereby not only reducing interfacial stress, but also rendering the stress distribution across the entire optical fiber more uniform (with a smaller ΔP), and further enhancing the radiation resistance of the optical fiber.

In addition, the radiation-insensitive single-mode optical fiber of the present invention exhibits a bending-induced additional loss of less than 0.1 dB at both 1310 nm and 1550 nm when coiled with 10 turns at a bending diameter of 30 mm. When exposed to a total radiation dose of 100 kGy, the radiation-insensitive single-mode optical fiber according to the examples of the present invention has an attenuation of less than 20 dB/km at the 1310 nm and 1550 nm wavelength bands. Furthermore, the maximum stress difference value ΔP across the profile of the radiation-insensitive single-mode optical fiber according to the examples of the present invention is less than 10 MPa.

The specific examples are as follows:
According to the technical solutions of the radiation-insensitive single-mode optical fiber set forth above, the parameters of the optical fiber were configured, and the manufacturing method thereof is as follows:
A silica tube was prepared by the outside vapor deposition (OVD) method. After cleaning the silica tube, silica co-doped with cerium element, aluminum element, and fluorine element was deposited on the inner thereof by means of plasma chemical vapor deposition (PCVD) or modified chemical vapor deposition (MCVD), followed by collapsing using a high-temperature furnace or oxyhydrogen flame to obtain a first prefabricated rod. The deposition materials comprise SiCl₄, O₂, C₂F₆, vaporized variable-valence metal cerium salt CeCl₃, and vaporized co-dopant aluminum salt AlCl₃. The content and distribution of the various elements in the optical fiber were controlled by maintaining the set values of gas flow meters for each raw material as constant or linearly varying. The raw materials were caused to react and deposit on the inner wall of the tube under the high temperature generated by the oxyhydrogen flame or the high energy generated in the resonant cavity.

The first prefabricated rod was etched with an acid and alkali solution, and then rinsed with deionized water to obtain a second prefabricated rod. The second prefabricated rod was drawn using a drawing tower to yield the radiation-insensitive single-mode optical fiber.

The profile parameters of the radiation-insensitive single-mode optical fibers fabricated in the various Examples and Comparative Examples of the present invention were presented in Table 1.

Referring to Fig. 2, the profile structures of the optical fibers in Examples 1-2 comprise a core layer, a first buffer layer, a first cladding layer, a second buffer layer, and a second cladding layer, arranged sequentially from inside to outside, wherein the first buffer layer is disposed around the exterior of the core layer, the first cladding layer is closely disposed around the first buffer layer, the second buffer layer tightly is closely disposed around the first cladding layer, and the second cladding layer is closely disposed around the second buffer layer. Each of the core layer, the first buffer layer, the first cladding layer, the second buffer layer, and the second cladding layer is quartz glass doped with cerium element, aluminum element, and fluorine element. The dopant concentrations in the first buffer layer and the second buffer layer vary linearly in the radial direction from inside to outside.

Referring to Fig. 1, the profile structures of the optical fibers in Examples 3-4 comprise a core layer, a first cladding layer, and a second cladding layer, wherein the first cladding layer is disposed around the exterior of the core layer, and the second cladding layer is disposed around the exterior of the first cladding layer. Each of the core layer, the first cladding layer, and the second cladding layer is quartz glass doped with cerium element, aluminum element, and fluorine element.

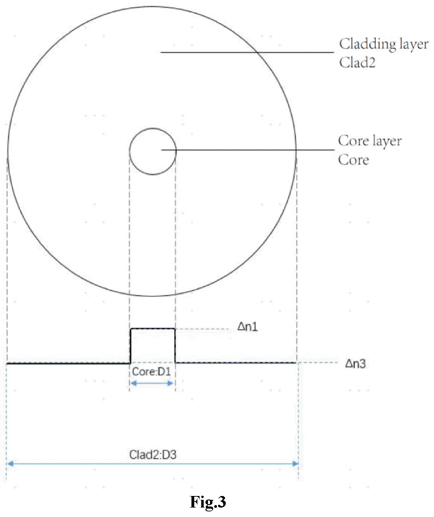

Referring to Fig. 3, the profile structure of the optical fiber according to Comparative Example 1 comprises a core layer and a cladding layer, i.e., only one cladding layer closely surrounding the core layer. Each of the core layer and the cladding layer is quartz glass doped with cerium element, aluminum element, and fluorine element.

With reference to Fig. 1, the profile structure of the optical fiber in Comparative Example 2 comprises a core layer, a first cladding layer, and a second cladding layer, wherein the first cladding layer surrounds outside the core layer, and the second cladding layer surrounds outside the first cladding layer. The core layer is made of undoped quartz glass, and the first cladding layer and the second cladding layer are all quartz glass only doped with a fluorine element.

With reference to Fig. 2, the profile structure of the optical fiber in Comparative Example 3 comprises a core layer, a first buffer layer, a first cladding layer, a second buffer layer, and a second cladding layer arranged in sequence from inside to outside, wherein the first buffer layer surrounds outside the core layer, the first cladding layer tightly surrounds the first buffer layer, the second buffer layer tightly surrounds the first cladding layer, and the second cladding layer tightly surrounds the second buffer layer. The core layer, the first buffer layer, the first cladding layer, the second buffer layer, and the second cladding layer are all quartz glass doped with cerium element, aluminum element, and fluorine element.

The performances of the optical fibers in the Examples and Comparative Examples of the present invention were detected as follows:
The optical fiber was radiated by a cobalt-60 radiation source with a total dose of 100 kGy at a temperature of 25±3°C. During radiation, the attenuation of the optical fiber was tested, using light sources with wavelengths of 1310 nm and 1550 nm.

The bending additional loss of the optical fiber was tested by an optical analyzer (PK company), wherein the optical fiber was coiled for 10 turns with a bending diameter of 30 mm. An attenuation difference value before and after bending was tested.

A stress distribution curve of the optical fiber was tested by using a three-dimensional refractive index analyzer (EXFO company), and a difference between the maximum and minimum stress values throughout the profile of the optical fiber was calculated.

The test results of the optical fiber performance in the Examples of the present invention and Comparative Examples were shown in Table 2.

**Table 1. Profile parameters of optical fiber**

| Parameters | | Example 1 | Example 2 | Example 3 | Example 4 | Comparative Example 1 | Comparative Example 2 | Comparative Example 3 |
|---|---|---|---|---|---|---|---|---|
| Content in core layer (ppm) | Cerium element A1 | 2300 | 1700 | 2200 | 1200 | 1500 | 0 | 2500 |
| | Aluminum element B1 | 4800 | 3400 | 5000 | 3000 | 4000 | 0 | 5000 |
| | Fluorine element C1 | 12000 | 8000 | 11000 | 7000 | 8900 | 0 | 12000 |
| Content in inner claddin g layer (ppm) | Cerium element A2 | 200 | 160 | 180 | 80 | / | 0 | 100 |
| | Aluminum element B2 | 700 | 320 | 600 | 300 | / | 0 | 1000 |
| | Fluorine element C2 | 18000 | 16000 | 15000 | 10000 | / | 16000 | 12000 |
| Content in outer claddin g layer (ppm) | Cerium element A3 | 1200 | 1000 | 1100 | 600 | 1100 | 0 | 1000 |
| | Aluminum element B3 | 3400 | 2000 | 2200 | 1600 | 1800 | 0 | 1900 |
| | Fluorine element C3 | 18000 | 12000 | 14000 | 9000 | 13000 | 12000 | 12000 |
| Δn1 (%) | | 0.30 | 0.40 | 0.35 | 0.32 | 0.36 | 0 | 0.40 |
| Δn2 (%) | | -0.38 | -0.35 | -0.29 | -0.35 | / | -0.55 | -0.26 |
| Δn3 (%) | | -0.04 | 0.05 | 0.05 | -0.02 | 0.01 | -0.36 | 0.04 |
| D1 (µm) | | 9.2 | 9.0 | 8.8 | 9.5 | 8.3 | 8.6 | 8.8 |
| D4 (µm) | | 13 | 12 | / | / | / | / | 13 |
| D2 (µm) | | 22.4 | 20.0 | 20.9 | 23.0 | / | 21.2 | 21.5 |
| D5 (µm) | | 28 | 26 | / | / | / | / | 25 |
| D3 (µm) | | 125.1 | 124.8 | 125.2 | 124.9 | 125.0 | 124.8 | 125.2 |

**Table 2. Performance of optical fiber**

| Performance | Example 1 | Example 2 | Example 3 | Example 4 | Comparative Example 1 | Comparative Example 2 | Comparative Example 3 |
|---|---|---|---|---|---|---|---|
| Attenuation at 100kGy radiation (dB/km@1310nm) | 5.9 | 6.1 | 12.9 | 17.6 | 25.8 | 35.4 | 29.7 |
| Attenuation at 100kGy radiation (dB/km@1550nm) | 6.5 | 7.1 | 14.0 | 19.7 | 27.1 | 34.2 | 30.1 |
| Bending additional attenuation @1310nm (dB) | 0.004 | 0.006 | 0.008 | 0.01 | 0.08 | 0.05 | 0.006 |
| Bending additional attenuation @1550nm (dB) | 0.070 | 0.025 | 0.094 | 0.086 | 0.351 | 0.163 | 0.093 |
| Maximum stress difference value ΔP (MPa) | 2.9 | 4.7 | 7.3 | 9.8 | 15.7 | 59.5 | 30.3 |

The difference between Examples 1, 2 and Examples 3, 4 lied in the presence or absence of the buffer layers. The results showed that, in Example 1 and 2 with the buffer layers, the ΔP of the optical fiber was smaller and the stress uniformity was better, thereby achieving a lower radiation induced attenuation and a better radiation-resistant performance.

The difference between Example 3 and Example 4 lied in that, the content A1 of cerium in the core layer set by the present invention is 1000-2500 ppm, preferably 1500-2500 ppm, and the content A2 of the cerium element in the first cladding layer is 50-500 ppm, preferably 100-400 ppm, the values of Example 3 were within the preferred range, while the values of Example 4 were not within the preferred range. As a result, in Example 3, the ΔP of the optical fiber was smaller and the stress uniformity was better, thereby achieving a lower radiation induced attenuation and a better radiation-resistant performance.

The difference between Comparative Example 1 and Examples 1, 2, 3, 4 lied in the presence or absence of the first cladding layer, which played a role in bending resistance. It can be seen from the bending additional attenuations that the introduction of the first cladding layer in Examples 1, 2, 3, 4 has a great improvement on the bending resistance performance.

The difference between Comparative Example 2 and Examples 1, 2, 3, 4 lied in that whether the contents of individual elements were within the ranges set by the present invention. In Comparative Example 2, the parameters exceeded the range of content values, and there was a significant difference in material composition and physical property between individual layers, resulting in an increase in ΔP and residual stress of the optical fiber after drawing, and thus leading to larger radiation induced attenuation and a poorer radiation-resistant performance.

The difference between Comparative Example 3 and Examples 1, 2, 3, 4 lied in that, the content ratio A1/A2 of the cerium element in the core layer and the first cladding layer as set by the present invention was preferably 5-20, while the A1/A2 in Comparative Example 3 was 25, which exceeded the range, such that there was a significant difference in material composition and physical property between the core layer and the first cladding layer, resulting in an increase in ΔP and residual stress of the optical fiber after drawing, and thus leading to larger radiation induced attenuation and a poorer radiation-resistant performance.

Those skilled in the art may easily understand that the examples described above are only the preferred examples of the present invention, and are not intended to limit the present invention. Any modification, equivalent substitution, improvement made within the spirit and principle of the present invention should be encompassed within the scope of protection of the present invention.

## Claims

1. A radiation-insensitive single-mode optical fiber, **characterized by** comprising a core layer, a first cladding layer, and a second cladding layer arranged in sequence from inside to outside; or comprising a core layer, a first buffer layer, a first cladding layer, a second buffer layer, and a second cladding layer arranged in sequence from inside to outside, wherein,
the core layer, the first buffer layer, the first cladding layer, the second buffer layer, and the second cladding layer are all made of quartz glass doped with a cerium element, an aluminum element, and a fluorine element.

2. The radiation-insensitive single-mode optical fiber of claim 1, **characterized in that**,
the cerium element has a constant content of A1 in a radial direction of the core layer, a constant content of A2 in a radial direction of the first cladding layer, and a constant content of A3 in a radial direction of the second cladding layer;
the aluminum element has a constant content of B1 in the radial direction of the core layer, a constant content of B2 in the radial direction of the first cladding layer, and a constant content of B3 in the radial direction of the second cladding layer; and
the fluorine element has a constant content of C1 in the radial direction of the core layer, a constant content of C2 in the radial direction of the first cladding layer, and a constant content of C3 in the radial direction of the second cladding layer.

3. The radiation-insensitive single-mode optical fiber of claim 1 or 2, **characterized in that**,
the content of the cerium element varies linearly from A1 to A2 in a radial direction of the first buffer layer from inside to outside, and varies linearly from A2 to A3 in a radial direction of the second buffer layer from inside to outside;
the content of the aluminum element varies linearly from B1 to B2 in the radial direction of the first buffer layer from inside to outside, and varies linearly from B2 to B3 in the radial direction of the second buffer layer from inside to outside; and
the content of the fluorine element varies linearly from C1 to C2 in the radial direction of the first buffer layer from inside to outside, and varies linearly from C2 to C3 in the radial direction of the second buffer layer from inside to outside.

4. The radiation-insensitive single-mode optical fiber of claim 2 or 3, **characterized in that**,
a content relationship of the cerium element in different layers satisfies A1>A3>A2;
a content relationship of the aluminum element in different layers satisfies B1>B3>B2; and
a content relationship of the fluorine element in different layers satisfies C2≥C3>C1.

5. The radiation-insensitive single-mode optical fiber of any one of claims 2-4, **characterized in that**,
in the core layer, the cerium element has a content A1 of 1000-2500 ppm, the aluminum element has a content B1 of 3000-6000 ppm, and the fluorine element has a content C1 of 3000-15000 ppm;
in the first cladding layer, the cerium element has a content A2 of 50-500 ppm, the aluminum element has a content B2 of 200-1600 ppm, and the fluorine element has a content C2 of 10000-20000 ppm; and
in the second cladding layer, the cerium element has a content A3 of 500-2000 ppm, the aluminum element has a content B3 of 1600-5000ppm, and the fluorine element has a content C3 of 5000-20000 ppm.

6. The radiation-insensitive single-mode optical fiber of claim 5, **characterized in that**, a content ratio A1/A2 of the cerium element in the core layer and the first cladding layer is 5-20; and/or,
a content ratio A1/A3 of the cerium element in the core layer and the second cladding layer is 1-5.

7. The radiation-insensitive single-mode optical fiber of any one of claims 1-6, **characterized in that**,
a relative refractive index difference Δn1 between the core layer and a silica is 0.2% to 0.5%;
a relative refractive index difference Δn2 between the first cladding layer and a silica is -0.25% to -0.6%; and
a relative refractive index difference Δn3 between the second cladding layer and a silica is -0.1% to 0.1%.

8. The radiation-insensitive single-mode optical fiber of any one of claims 1-6, **characterized in that**,
the core layer has a diameter of 7.5-10 µm, the first buffer layer has a diameter of 10-13 µm, the first cladding layer has a diameter of 18-24 µm, the second buffer layer has a diameter of 24-30 µm, and the second cladding layer has a diameter of 124-126 µm.

9. The radiation-insensitive single-mode optical fiber of any one of claims 1-6, **characterized in that**, a maximum stress difference value ΔP of the radiation-insensitive single-mode optical fiber is less than 10 MPa.

10. The radiation-insensitive single-mode optical fiber of any one of claims 1-6, **characterized in that**, in an environment with a total radiation dose of 100 kGy, the radiation-insensitive single-mode optical fiber has an attenuation of less than 20 dB/km at wavebands of 1310 nm and 1550 nm.
